# EUROPEAN PATENT APPLICATION

(11) **EP 2 913 497 A1**
(43) Date of publication of application: **02.09.2015**
(21) Application number: 15155487.0
(22) Date of filing: 17.02.2015
(51) Int. Cl.: F02B 37/12, F02B 37/18, F02M 25/07, F02D 9/10, F16K 1/20, F16K 31/52, F02D 11/04, F16K 1/22

(54) **Adjustment device for valve assembly**

(30) Priority: 28.02.2014 US 201461946173 P
(71) Applicant: BorgWarner Inc., Auburn Hills, MI 48326 (US)
(72) Inventor: Telep, Robert J., Livonia, MI Michigan 48154 (US); Pusta, Paul, Washington, MI Michigan 48094 (US)
(74) Representative: Hoefer & Partner Patentanwälte mbB

(57) **Abstract**

A product comprises an adjustment device (126) for a valve assembly comprising: a first portion (130) and a second portion (128) operably connected to the first portion (130) and offset from the first portion (130), a valve (98) constructed and arranged for receiving the second portion (128), and wherein when the first portion (130) is moved the second portion (128) will move the valve (98) with relation to a valve seat (86).

## Description

### CROSS-REFERENCE TO RELATED APPLICATIONS

This application claims the benefit of United States Provisional Application Serial Number 61/946,173, filed February 28, 2014.

### TECHNICAL FIELD

The technical field generally relates to products including valves that regulate fluid-flow in an internal combustion engine breathing system.

### BACKGROUND

A valve assembly may be used to regulate fluid-flow in an internal combustion engine breathing system.

### SUMMARY OF ILLUSTRATIVE VARIATIONS

One variation may include a product comprising an adjustment device for a valve assembly comprising: a first portion and a second portion operably connected to the first portion and offset from the first portion, a valve constructed and arranged for receiving the second portion, and wherein when the first portion is moved the second portion will move the valve with relation to a valve seat.

Another variation may include a method comprising: positioning a valve in relation to a valve seat comprising: providing an adjustment device having a first portion and a second portion operably connected to the first portion and offset from the first portion; providing a slot in a component in a valve assembly which is constructed and arranged to receive the second portion.

### SUMMARY OF ILLUSTRATIVE VARIATIONS

Other illustrative variations within the scope of the invention will become apparent from the detailed description provided hereinafter. It should be understood that the detailed description and specific examples, while disclosing variations within the scope of the invention, are intended for purposes of illustration only and are not intended to limit the scope of the invention.

### BRIEF DESCRIPTION OF THE DRAWINGS

Select examples of variations within the scope of the invention will become more fully understood from the detailed description and the accompanying drawings, wherein:
FIG. 1 illustrates a schematic of an internal combustion engine breathing system according to a number of variations.
FIG. 2 illustrates a perspective view of a valve assembly according to a number of variations.
FIG. 3 illustrates a top view of a valve assembly according to a number of variations.
FIG.4 illustrates a perspective view of a valve assembly according to a number of variations.
FIG. 5 illustrates a top view of a valve assembly according to a number of variations.
FIG. 6 illustrates a perspective view of a valve assembly according to a number of variations.
FIG. 7 illustrates a top view of a valve assembly according to a number of variations.
FIG. 8 illustrates a bottom perspective view of a valve assembly according to a number of variations.
FIG. 9 illustrates a cut view of a valve assembly according to a number of variations.
FIG. 10 illustrates a perspective view of a valve assembly according to a number of variations.
FIG. 11 illustrates a perspective view of a valve according to a number of variations.
FIG. 12 illustrates a perspective view of a valve assembly according to a number of variations.
FIG. 13 illustrates an isometric view of an adjustment pin according to a number of variations.
FIG. 13A illustrates a side view of an adjustment pin according to a number of variations.
FIG. 13B illustrates a side view of an adjustment pin according to a number of variations.
FIG. 14 illustrates a top perspective view of a valve assembly according to a number of variations.
FIG. 15 illustrates an isometric view of an adjustment pin according to a number of variations.
FIG. 16 illustrates an isometric view of an adjustment pin according to a number of variations.
FIG. 17 illustrates a top perspective view of a valve assembly according to a number of variations.

### DETAILED DESCRIPTION OF ILLUSTRATIVE VARIATIONS

The following description of the variations is merely illustrative in nature and is in no way intended to limit the scope of the invention, its application, or uses.

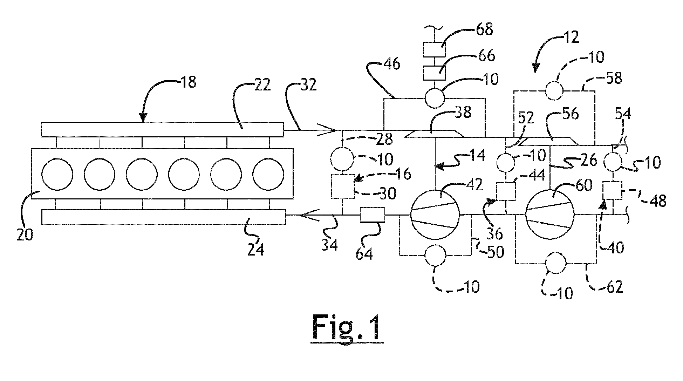

Referring to FIG. 1, in any number of variations, a valve with an adjustment device 10, 200, 300 may be used in an internal combustion engine breathing system 12 for internal combustion engines including, but not limited to, gasoline, diesel, and alternative fuels. The valve with adjustment device 10, 200, 300 may be used as any number of variations of valves including, but not limited to, a bypass valve, an EGR valve, an exhaust throttle valve, or an air intake valve.

In a number of variations, an internal combustion engine 18 combusts fuel and expels fluid in the form of exhaust gasses to the engine breathing system 12. The internal combustion engine 18 may be a spark-ignited engine or a diesel engine. The illustration shown is a diesel engine that may be of different types having different arrangements and different numbers of cylinders (e.g., in-line, V-type, V-6, V-8, etc.). A cylinder block 20 may define multiple piston bores. An exhaust manifold 22 may be equipped on an exhaust side of the internal combustion engine 18 to direct fluid-flow, such as the exhaust gasses, exhaled from the engine and to the engine breathing system 12. An intake manifold 24 may be equipped on an intake side of the internal combustion engine 18 to direct and supply air and/or air-fuel mixture to the engine.

The engine breathing system 12 may be used with the internal combustion engine 18 to manage fluid-flow supplied to, and expelled from the engine. The engine breathing system 12 may have various arrangements and various engine breathing system components. The illustration shown in FIG. 1 may include the EGR assembly 16, the high pressure stage turbocharger 14, and a low pressure stage turbocharger 26.

The EGR assembly 16 may direct exhaust gas back into the intake manifold 24. The EGR assembly 16 may have various arrangements and various components. The illustration shown may include an EGR passage 28 that may allow fluid-flow between the exhaust and intake manifolds 22 and 24, an EGR cooler 30, and an EGR valve such as the valve 10. The EGR cooler 30 may be a heat exchanger that cools the exhaust gasses that flow therethrough. The EGR valve regulates exhaust gas fluid-flow from an exhaust passage 32 and to an intake passage 34. The example EGR assembly 16 is a high pressure EGR assembly; in other examples, a first low pressure EGR assembly 36, a second EGR assembly 40, or both may also be included. Like the high pressure EGR assembly 16, the low pressure EGR assemblies 36, 40 may also include an EGR cooler 44, 48, an EGR passage 52, 54, and an EGR valve which may include the valve with adjustment device 10, 200, 300.

The high pressure stage turbocharger 14 is driven by exhaust gas fluid-flow to force an additional amount of air into the internal combustion engine 18. The turbocharger 14 may be various types, and may include a turbine 38 that is directly driven by the exhaust gas fluid-flow and that in turn drives a compressor 42 via a shaft. The compressor 42 pressurizes air that may eventually enter the internal combustion engine 18. The turbocharger 14 may also include a bypass passage 46, or a waste gate passage, which diverts exhaust gasses around the turbine 38. A valve with adjustment device 10, 200, 300 may be located within the bypass passage 46 to regulate fluid-flow through the bypass passage. Another bypass passage 50 may be included to divert intake air around the compressor 42. Again, a valve with adjustment device 10, 200, 300 may be located within the bypass passage 50 to regulate fluid-flow through the bypass passage.

In a number of variations, the low pressure stage turbocharger 26 may in some ways be similar to the high pressure stage turbocharger 14. Together, the turbochargers 14 and 26 make up a two-stage turbocharging system. The turbocharger 26 may be of various types and may include a turbine 56 and a compressor 60. A bypass passage 58 may divert exhaust gasses around the turbine 56, another bypass passage 62 may divert intake air around the compressor 60, or both. And a bypass valve, which may include the valve with adjustment device 10, 200, 300 may be located in the bypass passages 58, 62 to regulate fluid-flow through the bypass passages.

In a number of variations, the engine breathing system 12 may have more, less, and/or different components than shown and described. In one variation, one or more coolers 64 may be located between the components, a diesel particulate filter (DPF) may be provided, and only a single turbocharger may be provided constituting a one-stage turbocharging system.

In a number of variations, the valve with adjustment device 10, 200, 300 may be used in the engine breathing system 12 at any number of locations discussed above, and may be located at other places in the engine breathing system. Wherever the valve with adjustment device 10, 200, 300 is located, the valve with adjustment device 10, 200, 300 may control and regulate fluid-flow thereat to permit (open) fluid-flow therethrough or prevent (close) fluid-flow therethrough. The valve with adjustment device 10, 200, 300 may have various configurations and components.

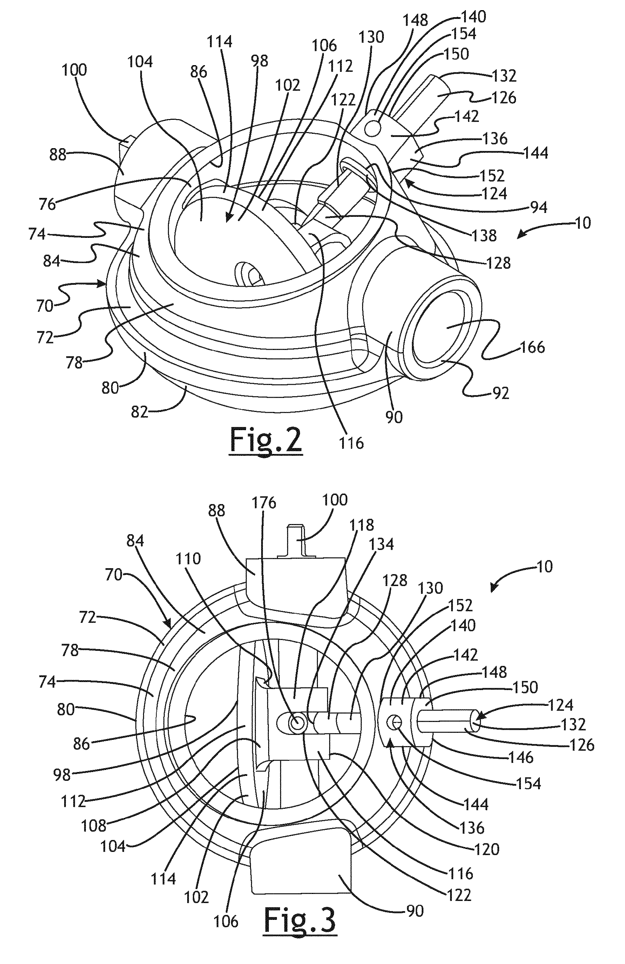

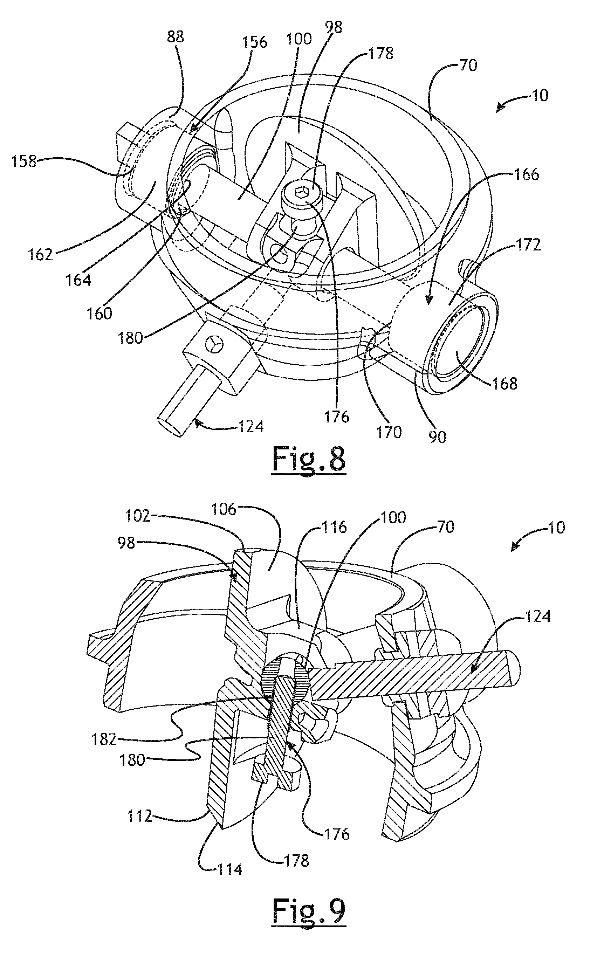

Referring to FIGS. 2-9, in a number of variations, a valve with adjustment device 10 may comprise a valve housing 70, a valve 98, a retaining pin 176 (best illustrated in FIG. 9), an operating shaft 100, one or more bushings 156, 166, and an adjustment device assembly 124.

In a number of variations, the valve housing 70 and the valve 98 may comprise a "triple eccentric" design. A "triple eccentric" valve may comprise a first offset between the operating shaft 100 axis and the valve seat 86 plane, a second offset which comprises displacement of the operating shaft 100 from the central bore, and a third offset which comprises offsetting the apex of the conical shape of the valve seat 86 from the flow line.

Referring to FIGS. 2-3, in a number of variations, a valve housing 70 may be constructed and arranged to house a valve 98. In a number of variations, the valve housing 70 may include a body 72 which may be curved. The body 72 may include a first surface 78, a second surface 80, a third surface 82, an inner surface 76, and an outer surface 74. In a number of variations, the first surface 78 may taper 84 inward as it extends upward and may comprise a truncated cone shape. The first surface 78 may also include a valve seat 86 which may extend around the circumference of the first surface 78. In a number of variations, the valve seat 86 may be constructed and arranged to mate with a valve face 112 as will be discussed hereafter. The valve seat 86 may comprise a truncated cone shape, for example as illustrated in FIG. 2. In a number of variations, the second surface 80 may extend a distance greater than the first and third surfaces 78, 82. In any number of variations, the body 72 may include a first and second cylindrical extension 88, 90 which may each extend axially outward from the body 72 and which may each include a first through-hole 92, for example as illustrated in FIG. 2. The first and second cylindrical extension 88, 90 may each be constructed and arranged to each accommodate a bushing 156, 166 (best illustrated in FIG. 8) and/or an operating shaft 100 as will be discussed hereafter.

In a number of variations, a valve 98 may comprise a valve plate 102 and a valve face 112, for example as illustrated in FIGS. 2 and 3. The valve plate 102 may include a first surface 104 and a second surface 106. The first and second surfaces 104, 106 may each be substantially circular in shape. The first surface 104 may include a first diameter and the second surface 106 may include a second diameter. In a number of variations, the diameter of the second surface 106 may be larger than the first surface 104. The valve face 112 may extend from the first surface 104 to the second surface 106 and may taper 114 inward toward the first surface 104 and may form a truncated cone shape, for example as illustrated in FIG. 9. The second surface 106 may also comprise a boss portion 116 which may be constructed and arranged to attach the valve 98 to the valve plate operating shaft 100. In a number of variations, a boss portion 116 may include a first surface 118 and a second surface 120. The first surface 118 may extend from a first side 108 of the valve plate 102. The second surface 106 may extend from a second side 110 of the valve plate 102. In a number of variations, a slot 122 may be located approximately central of the boss portion 116 on the first side 108 and may extend in a radial direction when the valve 98 is in an axial position, for example as illustrated in FIG. 3. The slot 122 may be constructed and arranged to accommodate an adjustment device 126 as will be discussed hereafter. In a number of variations, an operating shaft 100 may extend through the boss portion 116 of the valve 98 and may be constructed and arranged to rotate within the valve housing 70 as will be discussed hereafter.

Referring to FIGS. 8 and 9, in a number of variations, a first bushing 156 may comprise a top surface 158, a bottom surface 160, and a cylindrical wall surface 162 and may be constructed and arranged to fit inside a first cylindrical extension 88 on the valve housing 70. The first bushing 156 may also include a through-hole 164 which may extend through the top surface 158 and the bottom surface 160 and which may be constructed and arranged to accommodate an operating shaft 100. A second bushing 166 may comprise a top surface 168, a bottom surface 170, and a cylindrical wall surface 172 and may be constructed and arranged to fit inside a second cylindrical extension 90 on the valve housing 70. The bottom surface 170 may comprise a cavity which may be constructed and arranged to accommodate an operating shaft 100. In any number of variations, the bushings 156, 166 may eliminate or reduce friction between the operating shaft 100 and the valve housing 70 which may reduce wear on the parts.

In a number of variations, the valve 98 may be assembled into the valve housing 70. In a number of variations, a first bushing 156 may be positioned inside of the first cylindrical extension 88 and a second bushing 166 may be positioned inside of the second cylindrical extension 90. In a number of variations, the operating shaft 100 may extend through the boss portion 116 of the valve plate 102 and through the first and second bushings 156, 166. The first and second bushings 156, 166 may be pressed into the first and second cylindrical extensions 88, 90 and may allow operating shaft 100 to rotate which may allow the valve 98 to rotate to an open position and a closed position.

Referring to FIGS. 8-9, in a number of variations, a retaining pin 176 may comprise a head 178 and a shank 180. In a number of variations, the shank 180 may be partially threaded 182, for example as illustrated in FIG. 9. The retaining pin 176 may be installed into the second surface 120 of the boss portion 116 of the second surface 106 of the valve plate 102 and into the operating shaft 100 which may lock the valve 98 and the operating shaft 100 together which may allow them to rotate together.

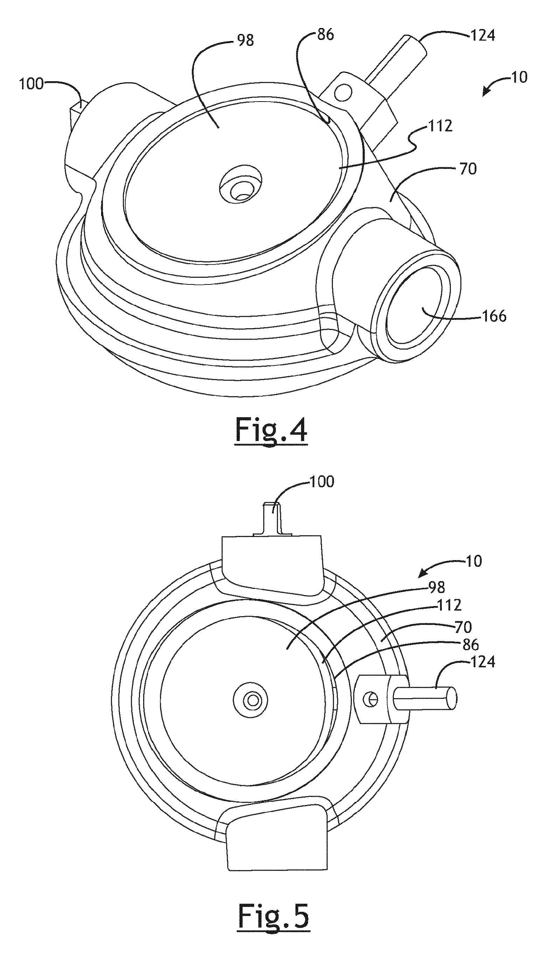

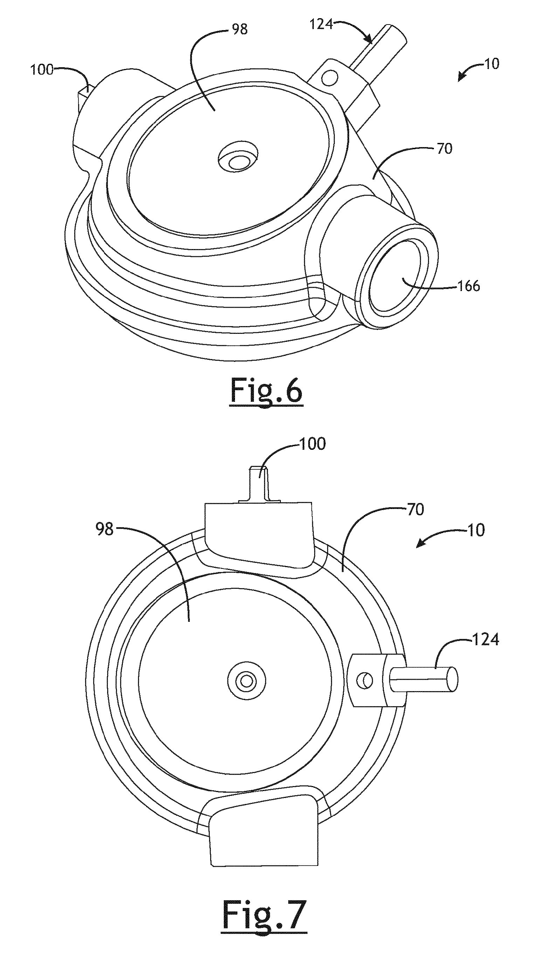

Referring to FIGS. 4-7, in a number of variations, the valve 98 may be positioned in the valve housing 70 so that the valve face 112 may be rotated to mate with the valve seat 86. In a number of variations, when the valve 98 is in a closed position, for example as illustrated in FIGS. 6 and 7, the valve face 112 may contact the valve seat 86 around at least a substantial portion of the circumference.

Referring to FIGS. 2-3, in a number of variations, an adjustment device assembly 124 may be attached to the body 72 of the valve housing 70. In a number of variations, an adjustment device assembly 124 may include an adjustment device 126 and an adjustment device mounting component 136. In a number of variations, an adjustment device 126 may include a first portion 130, a second portion 128, a top surface 132, and a bottom surface 134. The first portion 130 and the second portion 128 may each comprise an axis which may each be eccentric or offset. The first portion 130 and the second portion 128 may be any number of shapes including, but not limited to, cylindrical, or may include at least one flat surface. In one variation, the first portion 130 and the second portion 128 may comprise the same cross-sectional area. In another variation, the first portion 130 may comprise a cross-sectional area greater than the cross-sectional area of the second portion 128, for example as illustrated in FIG. 2. In another variation, the first portion 130 may comprise a cross-sectional area less than a cross-sectional area of the second portion 128.

In a number of variations, an adjustment device mounting component 136 may enclose at least a portion of the adjustment device 126 and may attach the adjustment device 126 to the valve housing 70. In a number of variations, the adjustment device mounting component 136 may comprise a first component 138, a second component 140, and a lip 152 extending therebetween. The first component 138 may be cylindrical in shape and may be constructed and arranged to fit inside of the second through-hole 94 on the valve housing body 72. The second component 140 may be larger than the diameter of the first component 138 and may include a first face 142, a second face 144, a third face 146, a fourth face 148, and a top face 150. The second component 140 may be rectangular or square shaped, and the first face 142 and the third face 146 may each include a curved surface. A through-hole 154 may extend through the first and third faces 142, 146 and may be used to mechanically fasten the adjustment device 126 to the adjustment device mounting component 136. The lip 152 may be substantially flush with the outer surface 74 of the valve housing body 72.

In any number of variations, the adjustment device assembly 124 may comprise individual components which may be added to existing hardware or may be integrally cast into the valve housing 70.

In a number of variations, during assembly of the valve with adjustment device 10, when the valve 98 is in a closed position, the adjustment device 126 may be rotated and/or moved which may cause the valve 98 to be positioned in relation to the valve seat 86 which may eliminate or reduce manufacturing dimensional stackup. In a number of variations, when the adjustment device 126 is in position in the slot 122 it may be locked into place in any of a number of variations including, but not limited to, welding and/or set screws.

Referring to FIG. 1, in an engine breathing system 12, an actuator 66 may selectively rotate the operating shaft 100 to rotate the valve 98 to an open or closed position. The actuator 66 may be of various types including electromechanical such as an electric motor or solenoid, pneumatic, or hydraulic. The actuator 66 may be located outside of the valve housing 70, and may be operatively connected to the operating shaft 100 through a mechanical linkage. The operation of the actuator 66 may be controlled by an electronic control unit (ECU) 68 through a closed-loop or open-loop control system using feedback control.

Referring to FIGS. 2-7, in a number of variations, the valve 98 and the valve seat 86 may be constructed and arranged so that as the valve 98 opens, the portion of the valve face 112 nearest to the valve plate operating shaft 100 separates from the valve seat 86 last and permits fluid to pass through. The valve 98 and the valve seat 86 may also be constructed and arranged so that as the valve 98 closes, as illustrated in FIGS. 4 and 5, the portion of the valve face 112 nearest to the valve plate operating shaft 100 approaches the valve seat 86 first and may mate with the valve seat 86 which may form a circumferentially continuous seal therebetween. In a closed position, as illustrated in FIGS. 6 and 7, the seal may be uninterrupted by any intervening structure or component, such as may be the case in some valves, such as a throttle valve, where an associated retaining pin or shaft extends through the associated seating surface, which may eliminate or reduce leakage. In order to ensure that the valve 98 is closed properly, the parallel component of the force vector to the valve seat 86 may need to be greater than the friction generated by normal force. In a number of variations, a valve with adjustment device 10 may assist the valve 98 to seal properly with the valve seat 86 by positioning the valve 98 in relation to the valve seat 86, which may prevent the valve 98 from contacting the valve seat 86 prematurely so that the valve 98 may close and seal properly.

The adjustment device 126 may also prevent or eliminate the valve 98 from sticking to the valve seat 86 in a closed condition after thermal shutdown and may reduce the valve's 98 sensitivity to tolerance by positioning the valve 98 in relation to the valve seat 86. An adjustment device 126 may assist in positioning a valve 98 in relation to the valve seat 86 even in an operating condition with an increase in friction for example, but not limited to, oxidation or contamination.

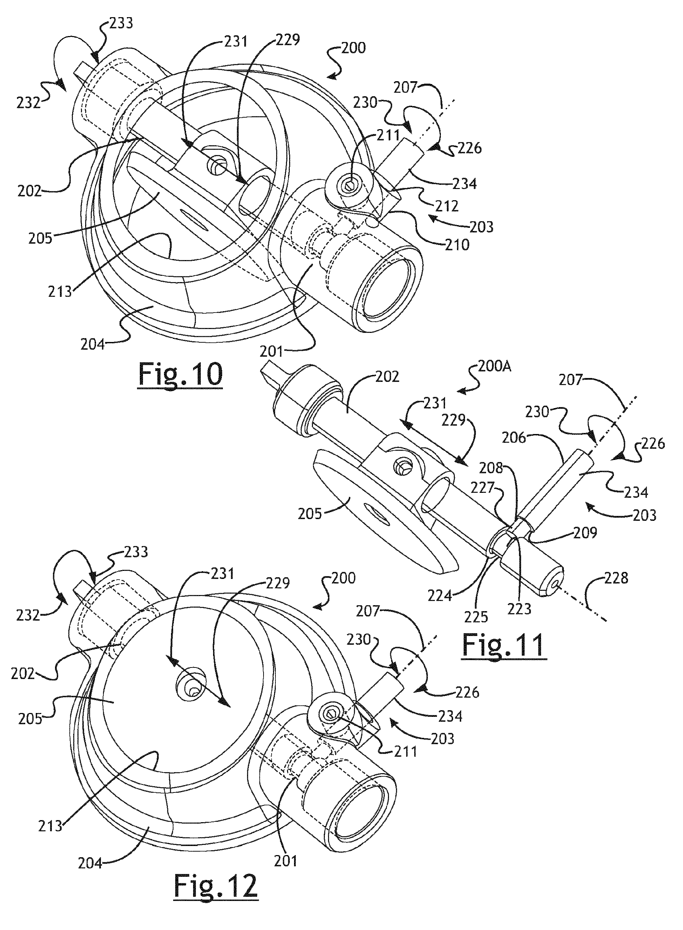

An alternate variation of the adjustment device may be seen in the valve assembly 200, illustrated in FIGS. 10 and 12 and partial valve assembly 200A shown in FIG. 11. It may be noted the valve bodies in FIGS. 10 and 12 are illustrated as transparent to allow viewing of internal components and features. The valve assembly 200 may be similar to the assembly 10 illustrated in FIG. 2 and may operate in a similar manner. A slot 201 may be formed in operating shaft 202 and the adjustment device 203 may be moved to another location on the valve body 204 relative to the repositioned slot 201. A valve 205 may be secured to operating valve shaft 202 in any number of variations including, but not limited to, welding, retention through pin, threaded fastener, or any other suitable means. The valve 205 may be positioned relative to the valve seat 213 in the valve body 204. When the operating shaft 202 is rotated in a first direction 232, the valve 205 may move away from the valve seat 213 and may allow fluid flow through the valve 205. When the operating shaft 202 is rotated in a second direction 233, the valve 205 may move towards the valve seat 213 and may seat and block fluid flow through the valve assembly 200.

The ability of the valve 205 to seat on the valve seat 213 may in part be determined by the position of the valve 205 relative to the valve seat 213. A more central position of the valve 205 to the valve seat 213 may improve the sealing and further reduce flow through the valve assembly 200. It may also prevent binding and improve overall freedom of valve movement. The alternate embodiment of the adjustment device may allow the valve 205 to be positioned relative to the valve seat 213 and it may reduce flow through the valve assembly when the valve 205 is in its fully closed position.

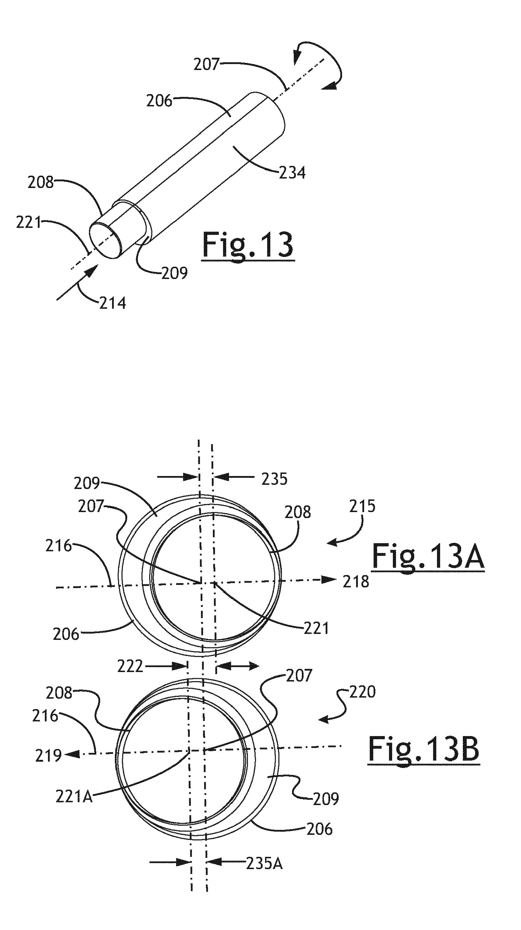

The adjustment device 203 may include an adjustment pin 234. The adjustment pin 234 may be similar to the adjustment pin 126 illustrated in FIG. 2. The adjustment pin 234 may have a first portion 206 that has an axis 207 for rotation there about. Referring to FIG. 13, the adjustment pin 234 may also have a second portion 208 comprising a generally cylindrical shape extending from a first end 209 of the first portion 206. The second portion 208 may be eccentric or offset 221 to axis 207 of the first portion 206 to provide a variable displacement as the first portion 206 is rotated about axis 207. For example, the second portion 208 may be eccentric 221, to axis 207 of the first portion 206, by an amount 235 such as 0.5mm, 1.0mm, or another value that may provide the desired range of displacement and range of adjustment. FIGS. 13A and 13B illustrate enlarged views of the adjustment pin 234 viewed in direction 214, as illustrated in FIG. 13. FIG. 13A illustrates the first portion 206 rotated in a first position 215 with the second portion 208 eccentric 221 to axis 207 by amount 235 along axis 216 in a first direction 218. FIG. 13B illustrates the first portion 206 rotated in a second position 220 with second portion eccentric 221 A to axis 207 by amount 235A along axis 216 in a second direction 219. The distance 222 between the first position 215 and the second position 220, along axis 216, may be the approximate range of adjustment of adjustment device 203. The range of adjustment may be approximate because of component tolerances, the shape of the second portion 208, required clearance for adjustment pin 234, or other relevant factors.

Referring to FIGS. 10 and 11, a boss 210 in the valve body 204 may comprise a circular opening 212 for receiving a first portion 206 of adjustment pin 234. The circular opening 212 may also act as a bearing surface for adjustment pin 234. The slot 201 may be formed or machined into the operating shaft 202 and may be designed to receive the second portion 208 of the adjustment pin 234. The slot 201 may comprise a first surface 223, a second surface 224, and third surface 225. In a number of variations, there may be a clearance between the second portion 208 and surfaces 223, 224, and 225 to allow movement there between.

Referring to the valve assembly 200, illustrated in FIGS. 10 and 11, and partial valve assembly 200A illustrated in FIG. 12, the adjustment device 203 may operate in the following manner. When the first portion 206 of the adjustment pin 234 is rotated in a first direction 226 about axis 207, the second portion 208 with offset 221 may be displaced along an axis 228. The cylindrical surface 227 of the second portion 208 may contact and bear against the first surface 223 of the slot 201. Continued rotation of the first portion 206 may cause movement of the operating shaft 202 in a first direction 229 that may be in a direction generally along the axis 228 of the operating shaft 202. Since the valve 205 may be secured to the operating shaft 202, the valve 205 may also move in direction 229 as adjustment pin 234 is rotated in the first direction 226 about axis 207. The valve 205 may be moving relative to the fixed position of the valve seat 213 in the valve housing 204. When the first portion 206 of the adjustment pin 234 is rotated in a second direction 230 about axis 207, the second portion 208 with an offset 221 may be displaced from the axis 207. The cylindrical surface 227 of the second portion 208 may contact and bear against the second surface 224 of the slot 201. Continued rotation of the first portion 206 may cause movement of the operating shaft 202 in a second direction 231 that may be in a direction generally along the same axis 228 of the operating shaft 202. Since the valve 205 may be secured to the operating shaft 202, the valve 205 may also move in direction 231 as the adjustment pin 234 is rotated in the second direction 230 about the axis 207. The valve 205 may again be moving relative to the fixed position of the valve seat 213 in the valve housing 204.

It may also be possible to rotate the adjustment pin 234 substantially in one direction and achieve the range of adjustment 222. For example, if the first portion 206 of the adjustment pin 234 were rotated 360° in either direction 226 or 230, the cylindrical surface 227 of the second portion 208 may contact surfaces 223 and 224, of the slot 201, and may move the operating shaft 202 and valve 205 in directions 229 and 231. The desire to rotate the adjustment pin 234 in one direction or two opposing directions may be based upon manufacturing methods, test methods, or other factors.

FIG. 12 illustrates a valve assembly 200 with a valve 205 seated on a valve seat 213 in the valve closed position. The movement of the valve 205, in response to the movement of the adjustment device 203, may provide a preferred position of the valve 205 relative to the valve seat 213 that may minimize the flow through the valve assembly 200 when the valve 205 is in a fully closed and seated condition. When the preferred position of the valve 205 relative to the valve seat 213 has been achieved, the adjustment pin 234 may be fixed in this position by a threaded fastener 211, welding, press pin, rivet, or any other suitable means. Fixing the adjustment pin 234 in position may prevent movement of the valve 205 from the preferred position relative to the valve seat 213.

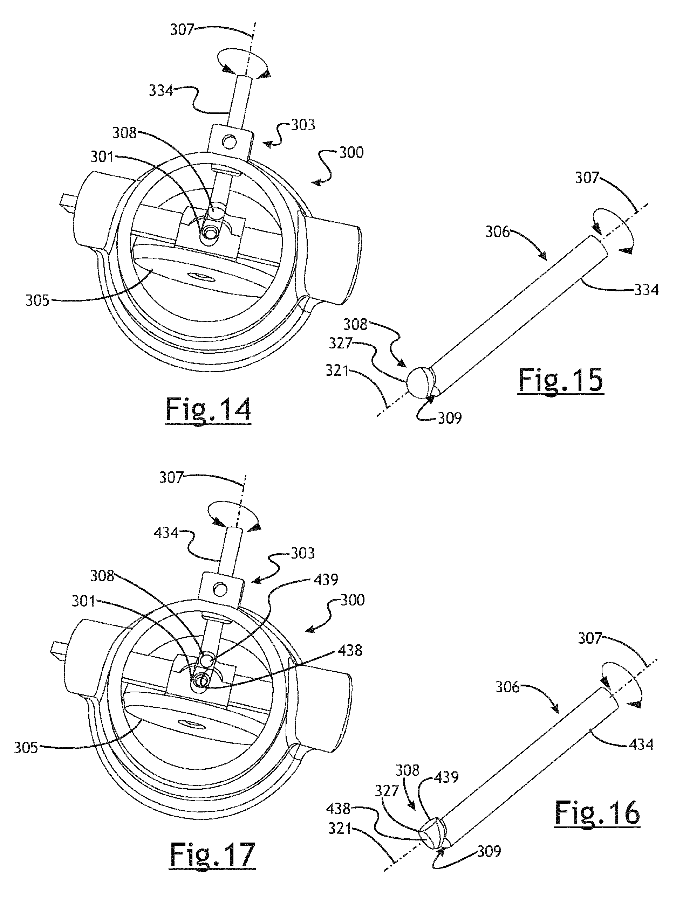

The adjustment pin 234 of the adjustment device 203 may also have different forms and features that may improve function and operation. For example, FIG. 14 illustrates a valve assembly 300 with an alternative adjustment pin 334. The valve assembly 300 and the adjustment device 303 may be similar to the valve assembly 200 and the adjustment device 203 as illustrated in FIG. 10 and may function in a similar manner. The adjustment device 303 may be moved to a location similar to that of the valve assembly 10 as illustrated in FIG. 2.

Referring to FIGS. 14 and 15, an adjustment pin 334 may be similar to the adjustment pin 234, as illustrated in FIG. 10, but the second portion 208 may be replaced with a generally spherically shaped portion 308 that may engage with the slot 301 of the valve assembly 300. The second generally spherically shaped portion 308 may extend from the first end 309 of a first portion 306. The spherical portion 308 may be offset 321 to the axis 307 of first portion 306 which may provide a variable displacement as the first portion 306 is rotated about axis 307. The function and operation of the adjustment device 303 and the adjustment pin 334 may be similar to the adjustment device 203 and the adjustment pin 234 previously described herein. The use of a spherical shape 327 may reduce the contact area with the slot 301 and may prevent binding as the valve 305 is rotated between the closed and open valve positions.

FIG. 16 illustrates another variation of an adjustment pin 434 that may be used in a valve assembly 300 and FIG. 17 illustrates the adjustment pin 434 installed in a valve assembly 300. Similar numbers will be used to identify similar features illustrated in FIGS. 16 and 17. The adjustment pin 434 may be similar to adjustment pin 334 but may also comprise a first and second flat surface 438 and 439. The first flat surface 438 may be located at the furthest end of the adjustment pin 434 and it may allow additional engagement with the slot 301 of the valve assembly 300. The additional engagement may allow a reduction in the depth of the slot 301 and may reduce the size of the valve 305. The second flat surface 439 may provide additional clearance with the slot 301 and may allow greater rotation of the valve 305.

The following description of variants is only illustrative of components, elements, acts, products and methods considered to be within the scope of the invention and are not in any way intended to limit such scope by what is specifically disclosed or not expressly set forth. The components, elements, acts, products and methods as described herein may be combined and rearranged other than as expressly described herein and still are considered to be within the scope of the invention.

Variation 1 may include a product comprising an adjustment device for a valve assembly comprising: a first portion and a second portion operably connected to the first portion and offset from the first portion, a valve constructed and arranged for receiving the second portion, and wherein when the first portion is moved the second portion will move the valve with relation to a valve seat.

Variation 2 may include a product as set forth in Variation 1 wherein the adjustment device is operably connected to a valve housing on a valve assembly.

Variation 3 may include a product as set forth in any of Variations 1-2 wherein the adjustment device is constructed and arranged to position a valve in relation to a valve seat.

Variation 4 may include a product as set forth in any of Variations 1-3 wherein the valve assembly is attached to an engine breathing system.

Variation 5 may include a product as set forth in any of Variations 1-4 further comprising a valve housing, wherein the valve housing includes a valve seat; wherein the valve comprises a valve plate, a valve face, and a boss portion, wherein the boss portion comprises a slot; a valve operating shaft, wherein the valve operating shaft extends through the boss portion of the valve and the valve housing; and wherein the adjustment device extends through the valve housing and mates with the slot on the boss portion of the valve.

Variation 6 may include a product as set forth in any of Variations 1-5 wherein the adjustment device is fixed in position after assembly.

Variation 7 may include a product as set forth in any of Variations 1-6 wherein the valve assembly is of a triple eccentric construction.

Variation 8 may include a product as set forth in any of Variations 1-4 and 6-7 further comprising a valve housing, wherein the valve housing includes a valve seat; wherein the valve comprises a valve plate, a valve face, and a boss portion; a valve operating shaft, wherein the valve operating shaft extends through the boss portion of the valve and the valve housing and wherein the operating shaft comprises a slot; and wherein the adjustment device extends through the valve housing and mates with the slot on the operating shaft.

Variation 9 may include a method comprising: positioning a valve in relation to a valve seat comprising: providing an adjustment device in a valve assembly, wherein the adjustment device comprises a first portion and a second portion operably connected to the first portion and offset from the first portion; providing a slot on the valve for receiving the second portion; and positioning the adjustment device to position the valve in relation to the valve seat.

Variation 10 may include a method comprising: positioning a valve in relation to a valve seat comprising: providing an adjustment device in a valve assembly, wherein the adjustment device comprises a first portion and a second portion operably connected to the first portion and offset from the first portion; providing a slot on an operating shaft for receiving the second portion; and positioning the adjustment device to position the valve in relation to the valve seat.

Variation 11 may include a method comprising: positioning a valve in relation to a valve seat comprising: providing an adjustment device having a first portion and a second portion operably connected to the first portion and offset from the first portion; and providing a slot in a component in a valve assembly which is constructed and arranged to receive the second portion.

Variation 12 may include a method as set forth in Variation 11 wherein the valve assembly component includes any of a throttle valve or a valve operating shaft.

The above description of select variations within the scope of the invention is merely illustrative in nature and, thus, variations or variants thereof are not to be regarded as a departure from the spirit and scope of the invention.

## Claims

1. A product comprising an adjustment device for a valve assembly comprising:
a first portion and a second portion operably connected to the first portion and offset from the first portion,
a valve constructed and arranged for receiving the second portion, and
wherein when the first portion is moved the second portion will move the valve with relation to a valve seat.

2. The product of claim 1 wherein the adjustment device is operably connected to a valve housing on a valve assembly.

3. The product of claim 1 wherein the adjustment device is constructed and arranged to position a valve in relation to a valve seat.

4. The product of claim 2 wherein the valve assembly is attached to an engine breathing system.

5. The product of claim 1 further comprising a valve housing, wherein the valve housing includes a valve seat;
wherein the valve comprises a valve plate, a valve face, and a boss portion, wherein the boss portion comprises a slot;
a valve operating shaft, wherein the valve operating shaft extends through the boss portion of the valve and the valve housing;
and wherein the adjustment device extends through the valve housing and mates with the slot on the boss portion of the valve.

6. The product of claim 1 wherein the adjustment device is fixed in position after assembly.

7. The product of claim 2 wherein the valve assembly is of a triple eccentric construction.

8. The product of claim 1 further comprising a valve housing, wherein the valve housing includes a valve seat;
wherein the valve comprises a valve plate, a valve face, and a boss portion;
a valve operating shaft, wherein the valve operating shaft extends through the boss portion of the valve and the valve housing and wherein the operating shaft comprises a slot;
and wherein the adjustment device extends through the valve housing and mates with the slot on the operating shaft.

9. A method comprising:
positioning a valve in relation to a valve seat comprising:
providing an adjustment device in a valve assembly, wherein the adjustment device comprises a first portion and a second portion operably connected to the first portion and offset from the first portion;
providing a slot on the valve for receiving the second portion; and
positioning the adjustment device to position the valve in relation to the valve seat.

10. A method comprising:
positioning a valve in relation to a valve seat comprising:
providing an adjustment device in a valve assembly, wherein the adjustment device comprises a first portion and a second portion operably connected to the first portion and offset from the first portion;
providing a slot on an operating shaft for receiving the second portion; and
positioning the adjustment device to position the valve in relation to the valve seat.

11. A method comprising:
positioning a valve in relation to a valve seat comprising:
providing an adjustment device having a first portion and a second portion operably connected to the first portion and offset from the from the first portion; and
providing a slot in a component in a valve assembly which is constructed and arranged to receive the second portion.

12. The method of claim 11 wherein the valve assembly component includes any of a throttle valve or a valve operating shaft.
